# EUROPÄISCHE PATENTSCHRIFT

(11) **EP 0 691 458 B1**
(45) Veröffentlichungstag und Bekanntmachung des Hinweises auf die Patenterteilung: **04.11.1998**
(21) Anmeldenummer: 95108458.1
(22) Anmeldetag: 02.06.1995
(51) Int. Cl.: F01M 1/12, F02B 75/24, F01M 11/02, F16N 39/00

(54) **Brennkraftmaschine mit zwei gegen die Vertikale geneigten Zylinderbänken**
Internal combustion engine with two banks inclined to the vertical
Moteur à combustion interne avec deux rangées de cylindres inclinés à la verticale

(30) Priorität: 09.07.1994 DE 4424248
(43) Veröffentlichungstag der Anmeldung: 10.01.1996
(73) Patentinhaber: Dr.Ing.h.c. F. Porsche Aktiengesellschaft, 70435 Stuttgart (DE)
(72) Erfinder: Distelrath, Winfried, D-70499 Stuttgart (DE); Esch, Hans-Joachim, Dr., D-71296 Heimsheim (DE); Reustle, Albrecht, D-74399 Walheim (DE)

(56) Entgegenhaltungen:
- FR-A- 2 625 256
- GB-A- 523 203
- US-A- 1 860 813
- US-A- 5 161 643
- PATENT ABSTRACTS OF JAPAN vol. 017 no. 271 (M-1417) ,26.Mai 1993 & JP-A-05 005409 (MAZDA MOTOR CORP) 14.Januar 1993,

## Beschreibung

Die Erfindung betrifft eine Brennkraftmaschine mit zwei gegen die Vertikale geneigten Zylinderbänken.

Derartige Brennkraftmaschinen sind in einer Vielzahl von Bau- und Ausführungsformen bekannt und werden beispielsweise als V-Motoren oder Boxer-Motoren ausgebildet. Aus der JP-A-50 005 409 ist beispielsweise eine Brennkraftmaschine mit zwei geneigten Zylinderbänken bekannt, an deren beiden Zylinderköpfen jeweils mindestens eine Schmiermittelpumpe angeordnet ist. Dieser Entgegenhaltung sind jedoch konkrete Hinweise auf den Antrieb der Nockenwellen und den Antrieb der Schmiermittelpumpen nicht zu entnehmen.

Aus der US-A-1,860,813 ist weiterhin eine als Reihenmotor ausgebildete Brennkraftmaschine mit hängendem Zylinderkopf bekannt, bei der ebenfalls eine Schmiermittelpumpe im Zylinderkopf angeordnet ist. Diese Schmiermittelpumpe weist zwei Zahnräder auf, die jeweils auf einer Nockenwelle angeordnet sind und gleichzeitig als Übertragungsmittel zwischen diesen beiden Nockenwellen dienen.

Aus der FR-A-26 25 256 ist eine Brennkraftmaschine bekannt, deren Ölkanäle in das Gehäuse der Brennkraftmaschine integriert sind. Die Ölentsorgung dieser als Boxermotor ausgebildeten Brennkraftmaschine ist als Schwerkraftentölung ausgelegt.

Aus der EP 0 399 216 B1 ist weiterhin eine Brennkraftmaschine bekannt, bei der die beiden obenliegenden, im Zylinderkopf angeordneten Nockenwellen über jeweils eine Steuerkette von einer Zwischenwelle angetrieben werden. Diese wiederum ist über einen kurzen Kettentrieb mit der Kurbelwelle verbunden. Die beiden Steuerketten werden dabei jeweils in einem Kettenkasten geführt, über den der Zylinderkopf und das Kurbelwellengehäuse miteinander verbunden sind. Im Fahrbetrieb des Kraftfahrzeuges kommt es insbesondere beim Beschleunigen (positiv oder negativ) und bei Kurvenfahrten zu Schwankungen des Ölspiegels.

Dies kann im Extremfall dazu führen, daß über die Verbindung zwischen Kurbelwellengehäuse und Zylinderkopf einer der beiden Zylinderköpfe fast vollständig mit Öl gefüllt wird, während der andere trocken läuft.

Aus der DE 40 07 939 C1 ist eine Einrichtung zur Rückführung von Schmieröl aus einem Steuerraum eines Zylinderkopfes einer Brennkraftmaschine bekannt. Dabei ist am Zylinderkopf eine Schmiermittelpumpe angebracht, die saugseitig mit einer Sammelleitung verbunden ist und deren Druckleitung außerhalb des Maschinengehäuses angeordnet ist und zum Ölvorratsbehälter führt. Die saugseitige Sammelleitung ist ebenfalls außen am Zylinderkopfgehäuse angebracht und über Bohrungen, die jeweils zwischen zwei Zylindern angeordnet sind, mit dem Innenraum des Zylinderkopfes verbunden. Diese Schmieröleinrichtung dient einzig und allein zur Rückführung des aus den Lagerstellen der Nockenwelle austretenden Schmieröls.

Demgegenüber liegt der Erfindung die Aufgabe zugrunde, eine gattungsgemäße Brennkraftmaschine so weiterzubilden, daß Schwankungen des Ölspiegels während des Betriebes weitgehend ausgeglichen werden und daß ein übermäßiges Ansteigen bzw. Abfallen des Ölspiegels im Zylinderkopf beim Beschleunigen und/oder bei Kurvenfahrten vermieden wird.

Diese Aufgabe wird erfindungsgemäß anhand der kennzeichnenden Merkmale des Hauptanspruches gelöst. Dadurch, daß je Zylinderkopf eine Schmiermittelpumpe vorgesehen ist, die Öl aus dem Zylinderkopf absaugt und in den gemeinsamen Ölsammelraum zurückpumpt, werden betriebsbedingte Schwankungen des Ölspiegels in den Zylinderköpfen ausgeglichen. Das Öl wird demzufolge gegen die Wirkung der Beschleunigungskräfte bzw. der Fliehkräfte zurückgepumpt. Durch die Anordnung der Schmiermittelpumpen direkt am Zylinderkopf und durch den Antrieb über die Nockenwelle wird auf einfache, kostengünstige und einbautechnisch vorteilhafte Weise ein ständiger Betrieb der Schmiermittelpumpen gewährleistet, die damit ohne Einschaltsensorik und aufwendige Ansteuerungsmittel oder aufwendige Antriebe auskommen.

Die Anordnung der Schmiermittelpumpe jeweils an der Außenwand des Zylinderkopfes macht diese leicht montierbar und im Bedarfsfall leicht austauschbar. Darüber hinaus wird durch diese Anordnung der Schmiermittelpumpe der Bauraum im Inneren des Zylinderkopfes frei von störenden Einflüssen gehalten.

Durch ein druckseitiges Öl-Luft-Scheideelement wird ein Verschäumen des Öls wirkungsvoll verhindert. Dieses Öl-Luft-Scheideelement kann beispielsweise als Beruhigungstopf oder als sogenannter Swirl-Pot ausgeführt werden.

Dieses Öl-Luft-Scheideelement kann vorteilhafterweise im Inneren des Kurbelwellengehäuses untergebracht werden, so daß die Außenabmessungen des Motors dadurch nicht vergrößert werden. Insbesondere bei Motoren in Boxeranordnung ist die Unterbringung im Kurbelwellengehäuse auch aus platztechnischen Gründen gut möglich.

Das Saugverhalten der Schmiermittelpumpe ist besonders gut, wenn die Saugleitung eine bestimmte Länge nicht überschreitet. Daher ist es vorteilhaft, wenn die Saugleitung im Bereich der Stirnwand angeordnet ist, an der die Schmiermittelpumpe angebracht ist, und von dort direkt in den Zylinderkopf mündet. Die Saugleitung kann dabei als gegossener oder gebohrter Kanal in der Wand des Zylinderkopfgehäuses verlaufen.

Ein günstiges Anschlußbild für die Schmiermittelpumpe ergibt sich, wenn die Saugleitung zumindest teilweise im Zylinderkopfdeckel angeordnet ist.

Im Hinblick auf das Anschlußbild und die Baugröße ist eine Ausbildung der Schmiermittelpumpe als Innenzahnradpumpe günstig. Diese kann relativ kompakt gebaut werden, so daß die Außenabmessungen des Gesamtmotors durch die angebaute Pumpe nur unwesentlich verändert werden.

Ein günstiger Kanalverlauf der Druckkanäle ergibt sich, wenn diese zumindest teilweise in einer Gehäusewand im Bereich des jeweiligen Kettenkastens bzw. des das Antriebsmittel führenden Gehäuseabschnittes angeordnet sind. Durch Ausbildung des Druckkanals als gegossene oder gebohrte Kanäle in der Wandung des betreffenden Gehäuseabschnittes kann vollständig auf externe oder interne Rohrleitungen verzichtet werden. Das Herstellen der Kanäle ist somit beim Erstellen des Gehäuses möglich.

Ein günstiger Unterbringungsbereich der Öl-Luft-Scheideelemente ist im Kurbelwellengehäuse etwa in der Mitte der Längserstreckung der Kurbelwelle gegeben, wobei die bauartbedingten Lücken zwischen den einzelnen Pleueln genutzt werden können. Die Öl-Luft-Scheideelemente lassen sich dabei beiderseits der Kurbelwelle anordnen, die Anordnung erfolgt vorteilhafterweise in V-Form oder senkrecht. Durch diese Bauform ist eine günstige Unterbringung gewährleistet, gleichzeitig wird ein gutes Trennverhalten von Luft und Öl ermöglicht.

Weitere Vorteile und vorteilhafte Weiterbildungen der Erfindung ergeben sich aus den Unteransprüchen und der Beschreibung. Das Prinzip der Erfindung und ein Ausführungsbeispiel der Erfindung sind in der nachfolgenden Beschreibung und Zeichnung näher erläutert. Letztere zeigt in
- Fig. 1: eine als schematische Draufsicht dargestellte Prinzipskizze der Brennkraftmaschine,
- Fig. 2: einen stark vereinfachten, prinzipiellen Schnitt quer zur Kurbelwelle einer Brennkraftmaschine in Boxeranordnung,
- Fig. 3: eine perspektivische Darstellung des Steuertriebs eines Ausführungsbeispiels der Erfindung,

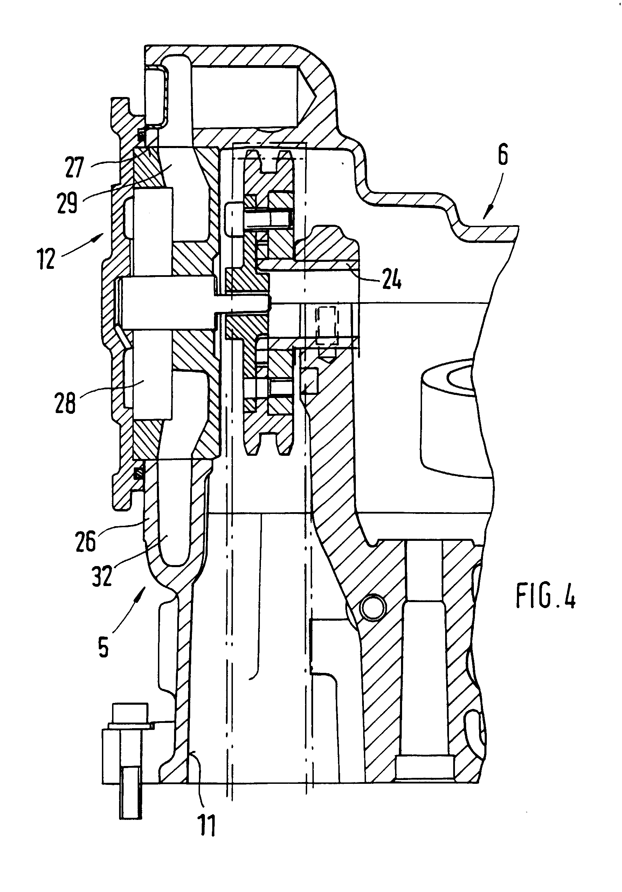

- Fig. 4: einen nur teilweise dargestellten Längsschnitt durch einen Zylinderkopf des Ausführungsbeispiels,

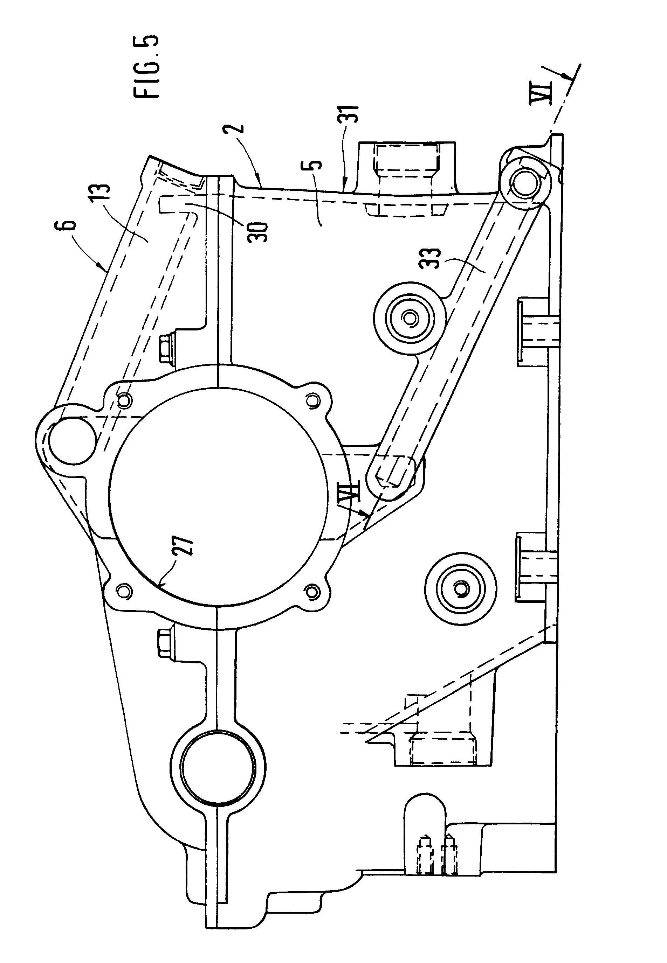

- Fig. 5: eine Ansicht einer Stirnseite dieses Zylinderkopfes,
- Fig. 6: einen Schnitt durch einen Teil der Ölführung gem. Linie VI-VI nach Fig. 5,

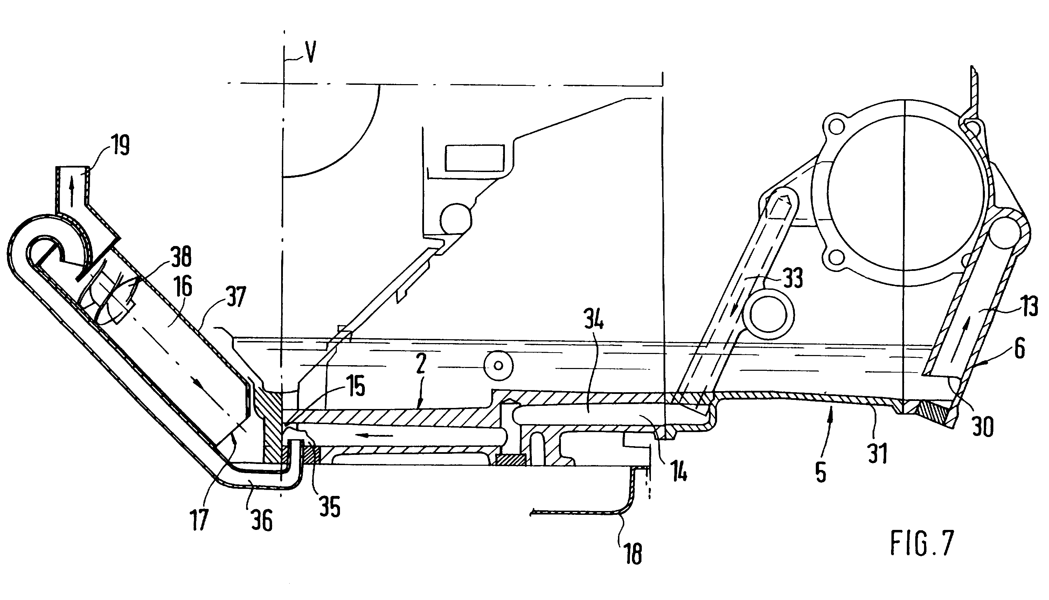

- Fig. 7: einen nur teilweise dargestellten Querschnitt durch das Motorgehäuse entlang dem in Fig. 1 schematisch dargestellten Kanalverlauf.

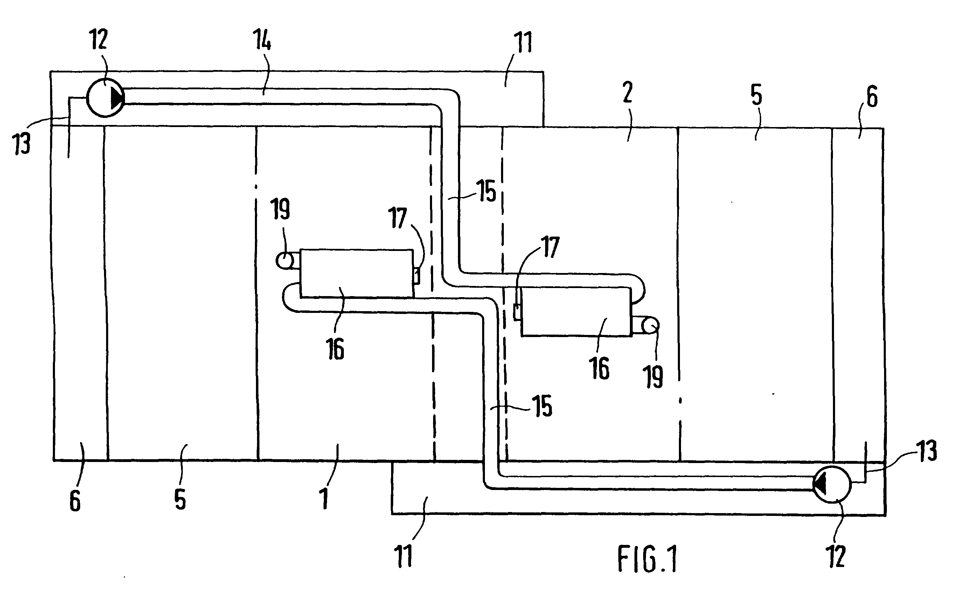

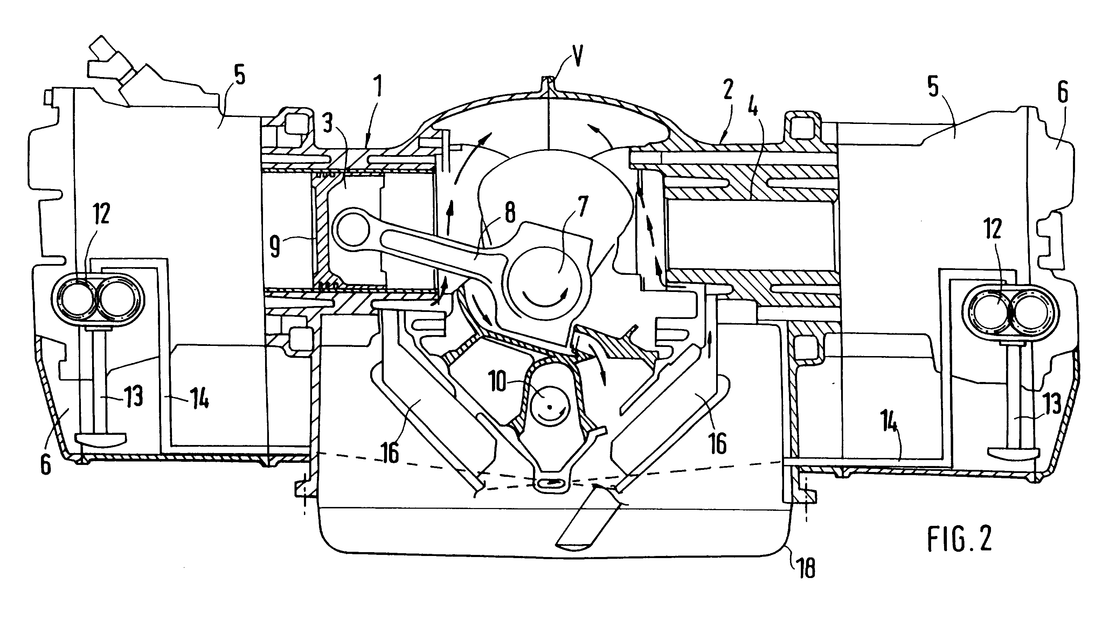

Die in den Fig. 1 und 2 schematisch dargestellte Brennkraftmaschine hat ein zweiteiliges Kurbelgehäuse 1, 2 mit zwei Reihen von Zylindern 3,4, die gegen die Vertikale V geneigt sind. Im hier dargestellten Prinzipbild und im nachfolgenden Ausführungsbeispiel ist die Brennkraftmaschine als Boxermotor ausgebildet. Die Erfindung bezieht sich aber gleichermaßen auf Brennkraftmaschinen in V-Form. Die beiden Reihen von Zylindern 3, 4 werden jeweils von einem Zylinderkopf 5 abgedeckt, in dem der Ventiltrieb untergebracht ist. Jeder der beiden Zylinderköpfe 5 wird von einem Zylinderkopfdeckel 6 abgeschlossen. Im Kurbelwellengehäuse 1, 2 ist eine Kurbelwelle 7 gelagert, die über Pleuel 8 und den jeweiligen Kolben 9 angetrieben wird. Die Kurbelwelle 7 ist mit einer untenliegenden Zwischenwelle 10 verbunden, von der die im Zylinderkopf 5 angeordneten Nockenwellen über entsprechende Antriebsmittel, wie beispielsweise Zahnriemen oder Steuerketten angetrieben sind. Diese Antriebsmittel laufen in gehäusefesten Kettenkästen 11, von denen einer an der vorderen und der andere an der hinteren Stirnseite der Brennkraftmaschine angeordnet ist. Über diese Kettenkästen 11 stehen der Innenraum des jeweiligen Zylinderkopfes 5 und der Innenraum des Kurbelwellengehäuses 1, 2 miteinander in Verbindung. Damit besteht eine Verbindung zwischen beiden Zylinderköpfen über den jeweiligen Kettenkasten und das Kurbelwellengehäuse. Diese Verbindung hat in der Draufsicht etwa die Form eines Z-Kanals. Ist die Brennkraftmaschine wie in diesem Ausführungsbeispiel mit parallel zur Fahrtrichtung ausgerichteter Kurbelwelle eingebaut, kommt es bei Kurvenfahrten zu einem Schwanken des Ölspiegels. Dabei steigt im kurvenäusseren Zylinderkopf 5 der Ölspiegel stark an, während im kurveninneren Zylinderkopf der Ölspiegel stark abfällt. Um diese Schwankungen auszugleichen, ist an jedem Zylinderkopf eine Schmiermittelpumpe 12 angebracht, die von einer Nockenwelle angetrieben ist und über eine Saugleitung 13 Öl aus dem Zylinderkopf absaugt. Über Druckkanäle 14, die in Gehäusewänden im Bereich der Kettenkästen 11 verlaufen, wird das Öl über anschließende Längskanäle 15 im Kurbelwellengehäuse 1, 2 zu Luft-Öl-Scheideelementen 16 gepumpt. Diese sind innerhalb des Kurbelwellengehäuses angeordnet und trennen das Luft-Öl-Gemisch auf. Ihre Ablauföffnung 17 mündet entsprechend in den unteren Teil des Kurbelwellengehäuses 1, 2 bzw. in die darunterliegende Ölwanne 18. Die obere Entlüftungsöffnung 19 ist mit einem oberen Teil des Kurbelwellengehäuses oberhalb des Ölspiegels verbunden. Der Kanalverlauf ist in Fig. 2 teilweise gestrichelt dargestellt.

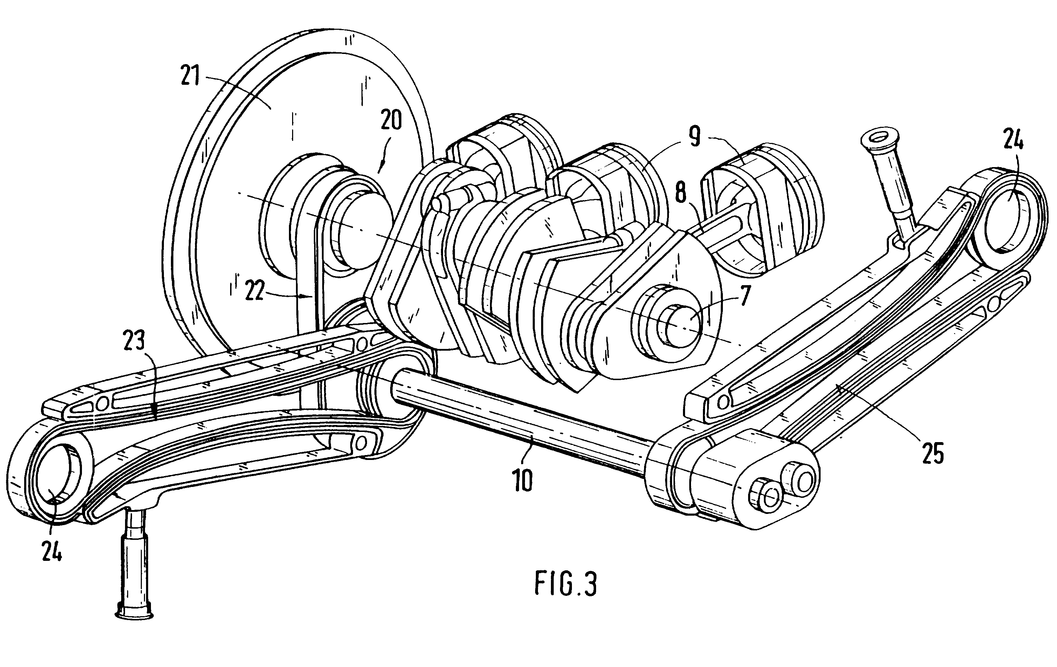

Fig. 3 zeigt vereinfacht den Steuertrieb eines Ausführungsbeispiels der Erfindung, wobei zur Verdeutlichung nur die Kolben und Pleuel einer Zylinderreihe dargestellt sind. Die Brennkraftmaschine ist in diesem Ausführungsbeispiel als sechszylindriger Boxermotor dargestellt, wobei die Erfindung jegliche andere Motorbauform mit zwei gegen die vertikale geneigte Zylinderbänken umfaßt, insbesondere V-Motoren. Die Zylinderzahl kann dabei von einem Zylinder je Zylinderbank bis sechs Zylinder je Zylinderbank und darüber hinaus reichen.

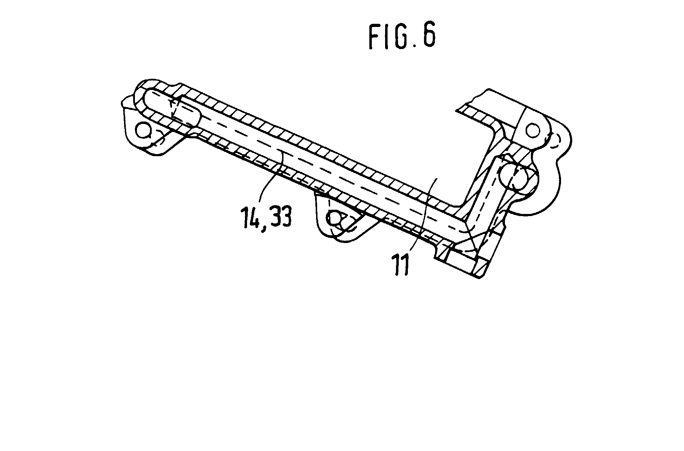

Die Kurbelwelle 7 trägt an einem Endabschnitt 20 ein Schwungrad 21 und benachbart dazu einen Antrieb 22 für eine unterhalb der Kurbelwelle parallel zu dieser verlaufenden Zwischenwelle 10. Im Bereich des Schwungrades wird ein erstes Antriebsmittel 23, beispielsweise ein Zahnriemen oder eine Steuerkette von der Zwischenwelle angetrieben. Dieses erste Antriebsmittel 23 wird im Kettenkasten 11 geführt und ist mit der im Zylinderkopf 5 gelagerten Nockenwelle 24 verbunden. Auf der schwungradfernen Seite der Kurbelwelle ist diese mit einem zweiten Antriebsmittel 25 verbunden, das im gegenüberliegenden Kettenkasten 11 geführt ist und mit der Nockenwelle 24 des gegenüberliegenden Zylinderkopfes 5 verbunden ist. An jeweils einer Stirnwand 26 ist im Bereich des Überganges zwischen Zylinderkopf 5 und Zylinderkopfdeckel 6 eine Aufnahmeöffnung 27 ausgebildet, in die jeweils eine Schmiermittelpumpe 12 eingesetzt ist. Diese ist in diesem Ausführungsbeispiel als Innenzahnradpumpe ausgebildet, wobei das Innenzahnrad 28 drehfest mit der Nockenwelle 24 verbunden ist. Die Schmiermittelpumpe ist vorteilhafterweise in der Stirnwand des jeweiligen Kettenkastens 11 angeordnet. Die Saugseite 29 der Schmiermittelpumpe 12 ist mit der Saugleitung 13 verbunden. Diese ist in einer Wand des Zylinderkopfdeckels 6 ausgebildet. Die Saugöffnung 30 befindet sich im Bereich der im Einbauzustand unteren Wand 31 des Zylinderkopfes 5. Die Druckseite 32 der Schmiermittelpumpe ist mit einem im Zylinderkopf 5 ausgebildeten Abschnitt 33 der Druckleitung 14 verbunden. Dieser Abschnitt 33 wird - wie in Fig. 6 dargestellt - durch mehrere in den Wandungen des Zylinderkopfes 5 ausgebildete, miteinander verbundene Bohrungen gebildet. Dieser Abschnitt 33 der Druckleitung ist mit einem im Kurbelwellengehäuse 1, 2 ausgebildeten weiteren Abschnitt 34 verbunden, der im Bodenbereich des Kurbelwellengehäuses bzw. des Kettenkastens 11 verläuft. Der weitere Abschnitt 34 setzt sich ebenfalls aus mehreren miteinander verbundenen Bohrungen im Gehäuse zusammen und mündet in einen etwa parallel zur Kurbelwelle 7 verlaufenden Längskanal 15. Dieser Längskanal 15 hat jeweils etwa in der Mitte der Kurbelwelle 7 einen erweiterten Abschnitt 35, in den die Eingangsleitung 36 des jeweiligen Öl-Luft-Scheideelementes 16 einmündet.

In diesem Ausführungsbeispiel ist das jeweilige Öl-Luft-Scheideelement 16 auf der dem zugehörigen Zylinderkopf 5 abgewandten Seite der Kurbelwelle 7 angeordnet. Die beiden Öl-Luft-Scheideelemente 16 sind gegen die Vertikale V geneigt und liegen in V-Form zueinander. Eine andere Einbaulage, insbesondere eine senkrechte, ist ohne weiteres möglich. Die Öl-Luft-Scheideelemente sind in diesem Ausführungsbeispiel als sog. Swirl-Pots ausgebildet und haben ein Gehäuse 37, an dessen Oberseite einerseits die Eingangsleitung 36 mündet und andererseits die Entlüftungsöffnung 19 abgeht. Im Inneren des Gehäuses ist eine Führungswendel 38 ausgebildet, an der der herunterlaufende Öl-Luft-Schaum getrennt wird. Die enthaltene Luft kann über die Entlüftungsöffnung 19 über einen oberen Abschnitt des Kurbelwellengehäuses 1, 2 entweichen, während das beruhigte, entschäumte Öl über den Ölablauf 17 in den unteren Teil des Kurbelwellengehäuses 1, 2 bzw. die Ölwanne 18 abläuft.

Bei der dargestellten Ausbildung des Steuertriebes der Brennkraftmaschine sind die beiden Zylinderköpfe 5 und die Zylinderkopfdeckel 6 identische Bauteile, die entsprechend der Lage der Kettenkästen 11 bzw. der Antriebsmittel 23, 25 der jeweiligen Nockenwellen versetzt eingebaut sind. Dementsprechend sind auch die beiden Schmiermittelpumpen 12 baugleich ausgebildet, wobei der jeweiligen Drehrichtung der Nockenwelle durch um 180° verdrehten Einbau einer der beiden Schmiermittelpumpen 12 Rechnung getragen wird.

## Patentansprüche

1. Brennkraftmaschine mit zwei gegen die Vertikale geneigten Zylinderbänken, mit einem Motorgehäuse mit Ölsammelraum, mit jeweils mindestens einer im Zylinderkopf angeordneten Nockenwelle, die über Antriebsmittel direkt oder indirekt von der Kurbelwelle der Brennkraftmaschine angetrieben wird und mit jeweils einem hohlen Gehäuseabschnitt zur Führung der Antriebsmittel, über den der Steuerraum des Zylinderkopfes und das Kurbelwellengehäuse miteinander verbunden sind, mit jeweils einer am Zylinderkopf (5) angeordneten Schmiermittelpumpe (12), deren Sauganschluß (13, 29) in den Zylinderkopf mündet, wobei die Schmiermittelpumpe (12) über die Nockenwelle (24) angetrieben ist, und über gehäuseintegrierte Kanäle (14, 32, 33, 15) druckseitig mit dem Ölsammelraum (1,2,18) verbunden ist, und an die Druckseite (14) der Schmiermittelpumpe (12) ein Öl-Luft-Scheideelement (16) angeschlossen ist, das im Kurbelwellengehäuse (1, 2) angeordnet ist.

2. Brennkraftmaschine nach Anspruch 1, dadurch gekennzeichnet, daß die Schmiermittelpumpe (12) jeweils an der Außenwand (26) des Zylinderkopfes (5) angeordnet ist.

3. Brennkraftmaschine nach einem der Ansprüche 1 und 2, dadurch gekennzeichnet, daß die Zylinder (3, 4) in Form eines Boxermotors angeordnet sind, und daß die jeweilige Saugleitung (13) der Schmiermittelpumpe (12) ihre Saugöffnung (30) im Bereich einer unteren Wand (31) des Zylinderkopfes (5) hat.

4. Brennkraftmaschine nach Anspruche 3, dadurch gekennzeichnet, daß die Saugleitung (13) in einer Wand des Zylinderkopfdeckels (6) ausgebildet ist.

5. Brennkraftmaschine nach einem der Ansprüche 1 bis 4, dadurch gekennzeichnet, daß die Schmiermittelpumpe (12) eine Innenzahnradpumpe ist.

6. Brennkraftmaschine nach einem der Ansprüche 1 bis 5, dadurch gekennzeichnet, daß die Druckleitung (14, 34) zumindest teilweise in einer Gehäusewand im Bereich des das jeweilige Antriebsmittel (23, 25) führenden hohlen Gehäusabschnittes (11) angeordnet ist.

7. Brennkraftmaschine nach einem der Ansprüche 1 bis 6, dadurch gekennzeichnet, daß die Druckleitung (14) jeweils einen Abschnitt (15) aufweist, der parallel unterhalb der Kurbelwelle (7) in einer Wand des Gehäuses (1, 2) verläuft.

8. Brennkraftmaschine nach einem der Ansprüche 3 bis 7, dadurch gekennzeichnet, daß die Öl-Luft-Scheideelemente (16) in einem Bereich angeordnet sind, der etwa der Mitte der Längserstreckung der Kurbelwelle (7) entspricht, und daß die Öl-Luft-Scheideelemente auf gegenüberliegenden Seiten der Kurbelwelle liegen.

9. Brennkraftmaschine nach Anspruch 8, dadurch gekennzeichnet, daß die Öl-Luft-Scheideelemente (16) in V-Form angeordnet sind.

10. Brennkraftmaschine nach einem der Ansprüche 1 bis 9, dadurch gekennzeichnet, daß die Schmiermittelpumpen (12) von außen in eine entsprechende Öffnung (27) in eine Stirnwand (26) im Übergangsbereich zwischen Zylinderkopf (5) und Zylinderkopfdeckel (6) eingesetzt sind.

## Claims

1. An internal-combustion engine with two cylinder banks inclined with respect to the vertical, with an engine housing with an oil-collecting chamber, with at least one respective camshaft arranged in the cylinder head and driven directly or indirectly by the crankshaft of the internal-combustion engine by way of drive means, and with one respective hollow housing portion for guiding the drive means, by way of which housing portion the control chamber of the cylinder head and the crankshaft housing are connected together, with at least one respective lubricant pump (12) which is arranged on the cylinder head (5) and the suction connexion (13, 29) of which opens into the cylinder head, wherein the lubricant pump (12) is driven by way of the camshaft (24), and is connected to the oil-collecting chamber (1, 2, 18) on the pressure side by way of ducts (14, 32, 33, 15) integrated in the housing, and an oil-air separating member (16), which is arranged in the crankshaft housing (1, 2), is attached to the pressure side (14) of the lubricant pump (12).

2. An internal-combustion engine according to Claim 1, **characterized in that** the lubricant pump (12) is arranged on the outer wall (26) of the cylinder head (5) in each case.

3. An internal-combustion engine according to one of Claims 1 and 2, **characterized in that** the cylinders (3, 4) are arranged in the form of a horizontally opposed engine, and the respective suction line (13) of the lubricant pump (12) has its suction opening (30) in the region of a lower wall (31) of the cylinder head (5).

4. An internal-combustion engine according to Claim 3, **characterized in that** the suction line (13) is formed in a wall of the cylinder-head cover (6).

5. An internal-combustion engine according to one of Claims 1 to 4, **characterized in that** the lubricant pump (12) is an internal gear pump.

6. An internal-combustion engine according to one of Claims 1 to 5, **characterized in that** the pressure line (14, 34) is arranged at least in part in a housing wall in the region of the hollow housing portion (11) guiding the respective drive means (23, 25).

7. An internal-combustion engine according to one of Claims 1 to 6, **characterized in that** the pressure line (14) is provided with a respective portion (15) which extends parallel below the crankshaft (7) in a wall of the housing (1, 2).

8. An internal-combustion engine according to one of Claims 3 to 7, **characterized in that** the oil-air separating members (16) are arranged in a region which corresponds substantially to the centre of the longitudinal extension of the crankshaft (7), and the oil-air separating members are situated on opposite sides of the crankshaft.

9. An internal-combustion engine according to Claim 8, **characterized in that** the oil-air separating members (16) are arranged in a V-shape.

10. An internal-combustion engine according to one of Claims 1 to 9, **characterized in that** the lubricant pumps (12) are inserted from outside into a corresponding opening (27) in an end wall (26) in the transition area between the cylinder head (5) and the cylinder-head cover (6).

## Revendications

1. Moteur à combustion interne avec deux lignes de cylindres inclinées par rapport à la verticale avec un carter-moteur et bac de collecte d'huile, avec au moins un arbre à cames disposé dans chaque culasse, qui est entraîné par l'intermédiaire de moyens d'entraînement, directement ou indirectement par le vilebrequin du moteur à combustion interne et avec chaque fois une partie de carter creuse pour le guidage des moyens d'entraînement, par laquelle la chambre de commande de la culasse et le carter du vilebrequin sont reliés entre eux, avec une pompe de lubrifiant (12), disposée sur chaque culasse (5), dont le branchement d'aspiration (13, 29) débouche dans la culasse, la pompe de lubrifiant (12) étant entraînée par l'intermédiaire de l'arbre à cames (24) et communiquant côté refoulement avec le bac de collecte d'huile (1, 2, 18), par des canaux (14, 32, 33, 15) intégrés au carter, et sur le côté refoulement (14) de la pompe de lubrifiant (12), étant raccordé un élément de séparation huile-air (16), qui est disposé dans le carter de vilebrequin (1, 2).

2. Moteur à combustion interne selon la revendication 1, caractérisé en ce que la pompe de lubrifiant (12) est disposée chaque fois sur la paroi extérieure (26) de la culasse (5).

3. Moteur à combustion interne selon l'une des revendications 1 et 2, caractérisé en ce que les cylindres (3, 4) sont disposés sous la forme d'un moteur boxer, et en ce que chaque conduite d'aspiration (13) de la pompe de lubrifiant (12) a son ouverture d'aspiration (30) dans la région d'une paroi inférieure (31) de la culasse (5).

4. Moteur à combustion interne selon la revendication 3, caractérisé en ce que la conduite d'aspiration (13) est formée dans une paroi du couvercle (6) de la culasse.

5. Moteur à combustion interne selon l'une des revendications 1 à 4, caractérisé en ce que la pompe de lubrifiant (12) est une pompe à pignon interne.

6. Moteur à combustion interne selon l'une des revendications 1 à 5, caractérisé en ce que la conduite de refoulement (14, 34) est disposée au moins en partie dans une paroi du carter, dans la région de la partie de carter (11) creuse, menant au moyen d'entraînement (23, 25) respectif.

7. Moteur à combustion interne selon l'une des revendications 1 à 6, caractérisé en ce que la conduite de refoulement (14) présente une portion (15), qui s'étend parallèlement au-dessous du vilebrequin (7) dans une paroi du carter (1, 2).

8. Moteur à combustion interne selon l'une des revendications 3 à 7, caractérisé en ce que les éléments de séparation huile-air (16) sont disposés dans une région qui correspond à peu près au milieu de l'extension longitudinale du vilebrequin (7), et en ce que les éléments de séparation huile-air se situent sur des côtés opposés du vilebrequin.

9. Moteur à combustion interne selon la revendication 8, caractérisé en ce que les éléments de séparation huile-air (16) sont disposés en V.

10. Moteur à combustion interne selon l'une des revendications 1 à 9, caractérisé en ce que les pompes de lubrifiant (12) sont insérées à partir de l'extérieur, dans une ouverture (27) correspondante d'une paroi frontale (26), dans la zone de transition entre le culasse (5) et le couvercle (6) de la culasse.
